# EUROPÄISCHE PATENTSCHRIFT

(11) **EP 0 943 509 B1**
(45) Veröffentlichungstag und Bekanntmachung des Hinweises auf die Patenterteilung: **28.04.2004**
(21) Anmeldenummer: 99101650.2
(22) Anmeldetag: 05.02.1999
(51) Int. Cl.: B60R 25/04

(54) **Vorrichtung zum schlüssellosen Starten eines Kraftfahrzeuges**
Vehicle keyless starter device
Dispositif de démarrage sans clé pour véhicule

(30) Priorität: 18.03.1998 DE 19811786
(43) Veröffentlichungstag der Anmeldung: 22.09.1999
(73) Patentinhaber: Volkswagen Aktiengesellschaft, 38436 Wolfsburg (DE)
(72) Erfinder: Havemann, Jörg, 29389 Bodenteich (DE); Patuschka, Sven, 38126 Braunschweig (DE); Pietsch, Matthias, 38442 Wolfsburg (DE)
(74) Vertreter: Banzer, Hans-Jörg, Dipl.-Ing.

(56) Entgegenhaltungen:
- DE-A- 4 416 507
- DE-A- 19 531 285
- FR-A- 2 739 821
- US-A- 5 552 641

## Beschreibung

Die Erfindung betrifft eine Vorrichtung zum schlüssellosen Start eines Kraftfahrzeuges gemäß dem Oberbegriff des Patentanspruches 1.

Bei Kraftfahrzeugen ist die Herstellung der Zugangsberechtigung (Schließ/Öffnungsvorgang) und die Inbetriebnahme (Motorstartvorgang) auf mechanischem Wege üblich. Das Öffnen bzw. Schließen der Fahrertür und auch die Bedienung des Zündschlosses (Entriegelung des Lenkradschlosses, Zündung/Anlassen) erfolgt dabei über den gleichen mechanischen Schlüssel. Daneben sind auch kombinierte mechanisch elektronische Systeme bekannt, bei denen der Schließvorgang auf elektronischem Wege mittels einer IR- oder HF-Fernbedienung erfolgt, wobei jedoch ein mechanischer Schlüssel als Notzugangsmöglichkeit bei Ausfall der Fembedienung mitgeführt werden muß. Der eigentliche Startvorgang erfolgt dabei herkömmlich mittels Drehung des Schlüssels im Zündschloß. Nachteilig bei den angeführten Systemen ist, daß mechanische Schlüssel unbedingt erforderlich sind, was einerseits eine zusätzliche Belastung sowie eine gewisse Sicherheitsproblematik aufgrund der geringen Anzahl unterschiedlicher Schlüssel mit sich bringt und andererseits ein aufwendig gestaltetes Zündschloß zur Erfüllung der gesetzlichen Anforderungen bzw. Auflagen hinsichtlich Diebstahlschutz (Lenkradschloß) und Fahrsicherheit (kein Abziehen während der Fahrt) notwendig macht.

Aus der DE 44 03 655 ist ein kombiniertes System für Schließvorgang und Motorstartvorgang bekannt, das die Zugangsberechtigung überprüft und die Inbetriebnahme realisiert. Hierbei werden durch sowohl eine externe als auch eine interne Redundanz des Schließsystems keinerlei mechanische Schlüssel benötigt. Weiterhin ist der Motorstartvorgang derart an das Schließsystem gekoppelt, daß auf ein aufwendiges Zündschloß verzichtet werden kann. Das System umfaßt eine Sendeeinheit ("Schlüssel") als integrierte Baueinheit aus einer Fernbedienungseinheit und einer Transpondereinheit. Sowohl die batteriebetriebene Fernbedienung als auch der Transponder können die Schließfunktion zum Öffnen/Schließen der Fahrzeugtüren durch Übermittlung eines codierten Signals übernehmen. Weiter umfaßt das System eine Empfängereinheit mit mindestens einen im Fahrzeuginneren oder am Fahrzeug angebrachten Empfänger zur Detektion und mindestens einer Auswerteelektronikeinheit zur Überprüfung des von der Sendeeinheit übermittelten codierten Signals. Weiter existiert eine erste Steuereinheit, die die Entriegelung/Verriegelung der Fahrzeugtüren überwacht. Diese Steuereinheit ist mit dem Empfänger der Empfangseinheit verbunden und wird durch das codierte Signal aktiviert/deaktiviert. Eine weitere Steuereinheit dient als Diebstahlschutz, die nach der Verifizierung des codierten Schlüsselsignales gleichzeitig mit dem Öffnungs-/Schließvorgang der Fahrzeugtür über die Verbindung Empfänger-Wegfahrsperre deaktiviert/aktiviert wird, so daß ein separates Lenkradschloß entbehrlich ist. Zusätzlich kann ein Anlaßschalter vorgesehen sein, durch den der Motorstart initiiert werden kann, sobald die Wegfahrsperre deaktiviert wurde. Der Motorstartvorgang wird dabei von allen Sicherungsmaßnahmen entkoppelt, so daß der Anlaßvorgang als eine noch verbleibende elektrische Funktion des Zündschlosses durch einen einfachen, beispielsweise als mechanischen Drehschalter ausgebildeten, Anlaßschalter realisiert werden kann. Dieses eine Vielzahl von Vorteilen aufweisende System hat jedoch hinsichtlich der Betriebssicherheit einige Nachteile. So muß sichergestellt sein, daß das Kraftfahrzeug nicht unabsichtlich gestartet wird, beispielsweise falls der Fahrzeugführer etwas aus dem Kraftfahrzeug holen möchte und dabei versehentlich an den Anlaßschalter kommt, oder aber daß nicht im Kraftfahrzeug sitzende Kinder unabsichtlich das Kraftfahrzeug starten können.

Aus der DE 44 35 894 ist es bekannt, eine weitere als Wegfahrsperre wirkende Induktionsspule in der Nähe des Anlaßschalters anzuordnen, so daß die Betätigung des Anlaßschalters nur zum Start führt, falls gleichzeitig der Identifikationsgeber die Zugangsberechtigung signalisiert. Diese Maßnahme löst jedoch weder das Problem des versehentlichen Startens durch den Kraftfahrzeugführer, noch stellt dies eine geeignete Kindersicherung dar. Befindet sich beispielsweise der Identifikationsgeber in einer Manteltasche und verläßt der Halter kurz das Kraftfahrzeug ohne Mantel, so könnte ein Kind unabsichtlich das Kraftfahrzeug starten.

Ein unter Sicherheitsaspekten verbessertes keyless-start-System ist aus der WO 96/28628 bekannt, das einen Startschalter und einen Sitzbelegungssensor umfaßt. Wird der Starter betätigt, so überprüft eine erste Auswerteelektronik die Daten vom Sitzbelegungssensor und des Bremspedals, ob dieses getreten wird. Erhält die Auswerteelektronik Daten, daß der Startschalter betätigt wurde, der Fahrersitz belegt ist und das Bremspedal getreten wird, so wird das Vorhandensein des Identifikationsgebers abgefragt und bei positivem Ergebnis der Startvorgang eingeleitet. Ein solches System ist aus der US -A-5 552 641 bekannt. Diese Druckschrift zeigt auch den Oberbegriff des Anspruch 1. Hinsichtlich der Kindersicherheit stellt dieses System einen großen Fortschritt dar, da zwei bewußte Handlungen durchgeführt werden müssen, um das Kraftfahrzeug zu starten, nämlich das Betätigen des Startschalters und das Drücken des Bremspedals. Auch hinsichtlich eines unbeabsichtigten Startens durch den Kraftfahrzeugführer besteht der Vorteil, daß zufällig zwei Handlungen durchgeführt werden müssen. Allerdings ist sowohl bei Kindern als auch bei berechtigten Kraftfahrzeugführem eine Situation denkbar, wo unabsichtlich diese Handlungen zusammenkommen und versehentlich das Kraftfahrzeug gestartet wird.

Der Erfindung liegt daher das technische Problem zugrunde, eine Vorrichtung zum schlüssellosen Starten eines Kraftfahrzeuges zu schaffen, bei der die Sicherheit verbessert ist, um versehentliche Startvorgänge zu unterdrücken.

Die Lösung des technischen Problems ergibt sich durch die Merkmale des Patentanspruches 1. Durch die Berücksichtigung der Kupplungspedalstellung bei Kraftfahrzeugen mit Schaltgetriebe und gegebenen falls zusätzlich des Gangwahlhebels wird eine weitere bewußte Handlungen zum Starten des Kraftfahrzeuges notwendig. Ist bei dem abgestellten Fahrzeug beispielsweise der erste Gang eingelegt, so erkennt dies die Auswertelogik. Da ein Starten mit einem eingelegten Gang zu einem "Sprung" des Kraftfahrzeuges führt, was oftmals zu kleinen Karambolagen in Parklücken führt, wertet das System einen eingelegten Gang als keine Absicht zu starten. Erst wenn zusätzlich das Kupplungspedal getreten wird, wertet das System die Handlung als Vorbereitung zum Starten des Kraftfahrzeuges. Bei einem Schaltgetriebe ist vorgesehen, daß unabhängig von der Stellung des Gangwahlhebels stets zum Starten das Kupplungspedal gedrückt werden muß. Dies erzwingt die zusätzlich bewußte Handlung so daß sich hinsichtlich der Sicherheitsaspekt eine Optimierung des Systems ergibt. Der mechanische Anlaßschalter ist bei diesem System optional, da ein versehentliches Treten des Kupplungspedals mit seinem hohen Druckpunkt und ein gleichzeitiges Treten des Bremspedals äußerst unwahrscheinlich ist. Der Vorteil des mechanischen Anlaßschalters liegt verstärkt im psychologischen Bereich, daß der Kraftfahrzeugführer durch eine manuelle Handlung, ähnlich dem Umdrehen des herkömmlichen Zündschlüssels, das Kraftfahrzeug startet. Sollte ein Gang eingelegt und das Kupplungspedal nicht getreten sein, so kann dies optisch und/oder akustisch dem Kraftfahrzeugführer zur Information signalisiert werden. Weitere vorteilhafte Ausgestaltungen der Erfindung ergeben sich aus den Unteransprüchen.

Zur Identifikation der Zugangs- bzw. Startberechtigung kann ein Transponder beliebiger äußerer Form und/oder ein Sprach- und/oder Gesichtsmuster- und/oder Fingerabdruck-Erkennungssystem Anwendung finden. Insbesondere bei Verwendung eines Sprach-Erkennungssystems kann dann beispielsweise der Startbefehl verbal durchgeführt werden, was einen unbeabsichtigten Start unmöglich macht.
Zur Erhöhung des Komforts kann der Auswerteelektronik ein Speicher mit fahrerspezifischen Einstellungen zugeordnet sein, die nach erfolgter Identifikation eingestellt werden, beispielsweise die Stellung des Fahrzeugsitzes oder Spiegeleinstellungen.

Da jedoch das Kraftfahrzeug auch von Dritten gestartet werden muß, beispielsweise von Service-Angestellten einer Werkstatt, kann vorgesehen sein, daß den Identifikationsgebern Nutzungsbeschränkungen wie Kilometeranzahl oder Fahrradius zugeordnet werden, die dann von dem System berücksichtigt werden. Zur Überprüfung des einzuhaltenden Fahrradius ist dann dem System beispielsweise ein GPS-Empfänger bzw. ein Navigationssystem zugeordnet.

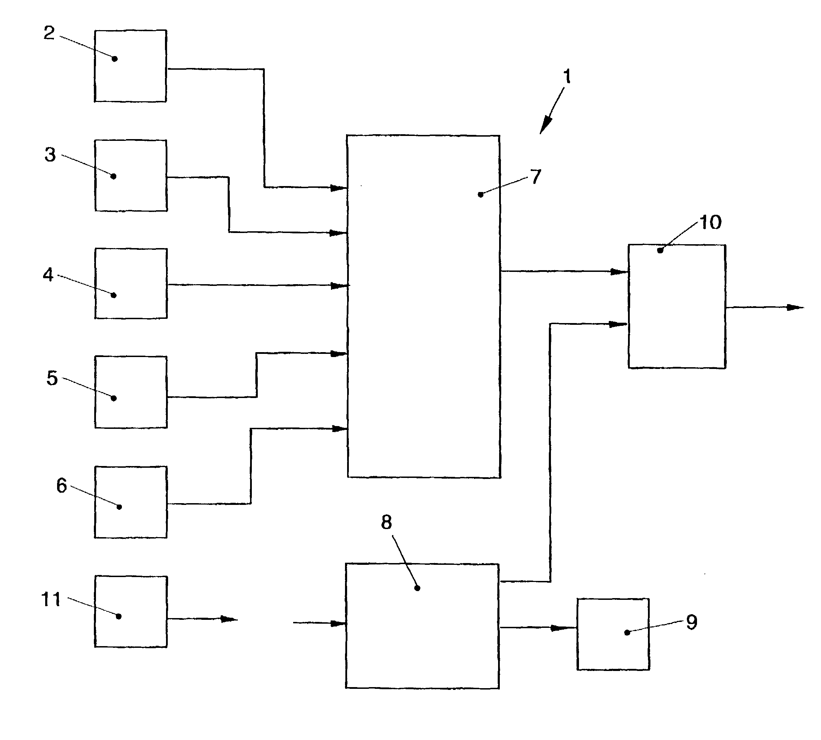

Die Erfindung wird nachfolgend anhand eines bevorzugten Ausführungsbeispieles näher erläutert. Die einzige Figur zeigt ein schematisches Blockschaltbild einer Vorrichtung zum schlüssellosen Starten eines Kraftfahrzeuges.

Die Vorrichtung 1 zum schlüssellosen Starten eines Kraftfahrzeuges mit Schalt-getriebe umfaßt einen mechanischen Anlaßschalter 2, einen Sitzbelegungssensor 3, einen Sensor 4 zur Erfassung der Stellung des Bremspedals, einen Sensor 5 zur Erfassung der Stellung des Kupplungspedals, einen Sensor 6 zur Erfassung der Stellung eines Gangwahlhebels, eine Auswerteelektronik 7, eine Empfangseinheit 8, eine Lenkradverriegelung 9, ein Motorsteuergerät 10 und einen transportablen Identifikationsgeber 11. Der mechanische Anlaßschalter 2 und die Sensoren 3 bis 6 sind mit der Auswerteelektronik 7 verbunden. Die Auswerteelektronik 7 ist ausgangsseitig wie die Empfangseinheit 8 mit dem Motorsteuergerät 10 verbunden, das das eigentliche Zündsignal erzeugt. Die mit dem Identifikationsgeber 11 in Wirkverbindung stehende Empfangseinheit 8 ist darüber hinaus ausgangsseitig mit einer Lenkradverriegelung 9 bzw. einer Wegfahrsperre verbunden.

Steigt ein Kraftfahrzeugführer in das Kraftfahrzeug ein, so überprüft zunächst die Empfangseinheit 8 die Zugangs- und Startberechtigung des Kraftfahrzeugführers. Dazu erfolgt eine aus dem Stand der Technik bekannte Frage - Antwort - Codierung mit dem Identifikationsgeber 11, wobei bei positivem Abfrageergebnis die Lenkradverriegelung 9 gelöst wird. Zusätzlich kann beispielsweise ein Türsensor vorgesehen sein, so die Frage - Antwort - Codierung erst bei geschlossenen Fahrzeugtüren beginnt. Um das Kraftfahrzeug nun zu starten, muß dann der Kraftfahrzeugführer den mechanischen Anlaßschalter 2 betätigen. Registriert die Auswerteelektronik 7 die Betätigung des Anlaßschalters 2, so überprüft die Auswerteelektronik 7, ob der Sitzbelegungssensor 3 eine Belegung des Fahrzeugsitzes anzeigt. Zur Erhöhung des Sicherheitsaspektes kann der Sitzbelegungssensor 3 derart ausgebildet sein, daß dieser auch Gewicht und/oder Sitzposition des Kraftfahrzeugführers erfaßt, um den berechtigten Kraftfahrzeugführer von Kindern zu unterscheiden bzw. aus der Haltung Rückschlüsse auf die Absichten des Fahrers zu ziehen. Erfaßt der Sitzbelegungssensor 3 einen Kraftfahrzeugführer, so wird weiter von der Auswerteelektronik 7 überprüft, ob das Bremspedal betätigt wird. Ist auch diese Abfrage positiv, so wird weiter geprüft, ob das Kupplungspedal betätigt wird. Verlaufen alle Abfragen positiv, so erzeugt die Auswerteelektronik 7 ein Steuersignal für das Motorsteuergerät 10, das dann die Zündung initiiert.

Sind das Bremspedal und/oder das Kupplungspedal als "brake-by-wire" bzw. "clutch-by-wire"-System ausgebildet, so können die von den Sensoren 4, 5 gelieferten Signale direkt aus den zugeordneten Steuergeräten der x-by-wire- Systeme abgegriffen werden. Da diese jedoch teilweise in das Motorsteuergerät 10 integrierbar sind, können die Signale vom Motorsteuergerät 10 abgegriffen werden, oder aber ein Teil der Auswerteelektronik 7 in das Motorsteuergerät 10 integriert werden, so daß sich der Verdrahtungsaufwand erheblich reduziert, da auf separate Sensoren verzichtet werden kann.

## Patentansprüche

1. Vorrichtung zum schlüssellosen Starten eines Kraftfahrzeuges, umfassend eine Eingabe- und/oder Empfangseinheit (8) zur Identifikation der Startberechtigung, einen Sitzbelegungssensor (3) und eine mit dem Sitzbelegungssensor (3) verbundene Auswerteelektronik (7), der ein die Stellung (4) eines Bremspedals repräsentierendes Signal zugeführt wird, **dadurch gekennzeichnet, daß** der Auswerteelektronik (7) zusätzlich ein die Kupplungspedalstellung (5) repräsentierendes Signal zugeführt wird, wobei die Auswerteelektronik derart ausgestaltet ist, daß sie das Starten des Kraftfahrzeugs in Abhängigkeit von den ihr zugeführten Signalen ermöglicht.

2. Vorrichtung nach Anspruch 1, **dadurch gekennzeichnet, daß** der Auswerteeinrichtung (7) ein die Gangstellung (6) repräsentierendes Signal zugeführt wird.

3. Vorrichtung nach Anspruch 1 oder 2, **dadurch gekennzeichnet, daß** die Empfangseinheit (8) zum Empfang eines Transpondersignals ausgebildet ist.

4. Vorrichtung nach einem der vorangegangenen Ansprüche, **dadurch gekennzeichnet, daß** die Eingabeeinheit (8) zur Identifikation der Startberechtigung als Fingerabdruck-Erkennungssystem, als Sprach-Erkennungssystem und/oder als Gesichtsmuster-Erkennungssystem ausgebildet ist.

5. Vorrichtung nach einem der vorangegangenen Ansprüche, **dadurch gekennzeichnet, daß** der Eingabe- und/oder Empfangseinheit (8) zur Identifikation ein Speicher mit fahrerspezifischen Daten zugeordnet ist, die von Stelleinrichtungen des Kraftfahrzeuges abrufbar sind.

6. Vorrichtung nach einem der vorangegangenen Ansprüche, **dadurch gekennzeichnet, daß** dem Identifikationsgeber (11) Nutzungsbeschränkungen zuordnenbar sind, die von der Auswerteelektronik (7) berücksichtigbar sind.

## Claims

1. Device for the keyless starting of a motor vehicle, comprising an input and/or receiver unit (8) for identifying the starting authorization, a seat occupation sensor (3) and evaluation electronics (7) which are connected to the seat occupation sensor (3) and to which a signal which represents the position (4) of a brake pedal is fed, **characterized in that** the signal which represents the position (5) of the clutch pedal is additionally fed to the evaluation electronic (7), the evaluation electronics being configured in such a way that they permit the motor vehicle to start as a function of the signals fed to them.

2. Device according to Claim 1, **characterized in that** a signal which represents the gear speed position (6) is fed to the evaluation device (7).

3. Device according to Claim 1 or 2, **characterized in that** the receiver unit (8) is designed to receive a transponder signal.

4. Device according to one of the preceding claims, **characterized in that** the input unit (8) is designed to identify the starting authorization as a finger-print recognition system, as a speech recognition system and/or as a face-pattern recognition system.

5. Device according to one of the preceding claims, **characterized in that** a memory with driver-specific data is assigned to the input and/or receiver unit (8) for identification purposes, which data can be retrieved from actuating devices of the motor vehicle.

6. Device according to one of the preceding claims, **characterized in that** the usage restrictions which can be taken into account by the evaluation electronics (7) can be assigned to the identification sensor (11).

## Revendications

1. Dispositif de démarrage sans clé d'un véhicule automobile, comprenant une unité de saisie et/ou de réception (8) pour l'identification de l'autorisation de démarrage, un capteur d'occupation du siège (3) et une électronique d'analyse (7) connectée au capteur d'occupation du siège (3), à laquelle est envoyé un signal représentant la position (4) d'une pédale de frein, **caractérisé en ce qu'**un signal représentant la position de la pédale d'embrayage (5) est en outre envoyé à l'électronique d'analyse (7), l'électronique d'analyse étant configurée de telle sorte qu'elle permette le démarrage du véhicule automobile en fonction des signaux qu'elle reçoit.

2. Dispositif selon la revendication 1, **caractérisé en ce qu'**un signal représentant la position des vitesses (6) est envoyé au dispositif d'analyse (7).

3. Dispositif selon la revendication 1 ou 2, **caractérisé en ce que** l'unité de réception (8) est réalisée pour recevoir un signal de transpondeur.

4. Dispositif selon l'une quelconque des revendications précédentes, **caractérisé en ce que** l'unité de saisie (8) pour l'identification de l'autorisation de démarrage est réalisée sous la forme d'un système de reconnaissance d'empreintes digitales, d'un système de reconnaissance vocale et/ou d'un système de reconnaissance de modèle du visage.

5. Dispositif selon l'une quelconque des revendications précédentes, **caractérisé en ce qu'**une mémoire avec des données spécifiques au conducteur est associée à l'unité de saisie et/ou de réception (8) pour l'identification, lesquelles données peuvent être consultées par des dispositifs de commande du véhicule automobile.

6. Dispositif selon l'une quelconque des revendications précédentes, **caractérisé en ce que** des limitations d'utilisation peuvent être affectées au détecteur d'identification (11), lesquelles peuvent être prises en compte par l'électronique d'analyse (7).
